# Europäisches Patentamt

## European Patent Office

## Office européen des brevets

(19)

(11) Veröffentlichungsnummer: **0 093 704**
**B1**

(12) **EUROPÄISCHE PATENTSCHRIFT**

(45) Veröffentlichungstag der Patentschrift:
01.04.87

(51) Int. Cl.⁴: **B 01 F 3/04,** B 01 F 5/02,
C 02 F 3/12

(21) Anmeldenummer: 83890061.1

(22) Anmeldetag: 25.04.83

(54) Verfahren für die Vermischung von Flüssigkeiten mit Gasen.

(30) Priorität: 04.05.82 AT 1739/82

(43) Veröffentlichungstag der Anmeldung:
09.11.83 Patentblatt 83/45

(45) Bekanntmachung des Hinweises auf die Patenterteilung:
01.04.87 Patentblatt 87/14

(84) Benannte Vertragsstaaten:
DE FR IT

(56) Entgegenhaltungen:
EP - A - 0 044 498
DE - A - 2 634 496
DE - A - 3 028 987
FR - A - 2 326 384
NL - A - 7 409 053
US - A - 2 361 982
US - A - 3 775 314
US - A - 4 271 099

Journal of the Water Pollution Control Federation, Band 41, Nr. 10 (Okt. 1969), Seiten 1726-1736

(73) Patentinhaber: VOEST-ALPINE Aktiengesellschaft,
Friedrichstrasse 4, A-1011 Wien (AT)

(72) Erfinder: Schweizer, Michel, Dipl.-Ing., Gössgraben 16,
A-8793 Trofalach (AT)
Erfinder: Vermes, Johann, Dipl.-Ing.,
Prechtlerstrasse 77, A-4020 Linz (AT)

(74) Vertreter: Haffner, Thomas M., Dr. et al,
Patentanwaltskanzlei Dipl.-Ing. Adolf Kretschmer Dr.
Thomas M. Haffner Schottengasse 3a, A-1014 Wien (AT)

## Beschreibung

Die Erfindung bezieht sich auf ein Verfahren für die Vermischung von Flüssigkeiten mit Gasen zum Eintragen von Gasen in eine Flüssigkeit unterhalb ihres Flüssigkeitsspiegels, bei welchem sowohl das Gas als auch die Flüssigkeit unter Druck einer Düse zugeführt werden. Insbesondere für Belüftungseinrichtungen für biologische Stufen von Abwasserreinigungsanlagen ist es von wesentlicher Bedeutung, dass die in die Flüssigkeit eingebrachte Luft möglichst intensiv mit dem Wasser vermischt wird, um ein für die Tätigkeit von Bakterien geeignetes Milieu zu schaffen und aufrechtzuerhalten. Bekannte Einrichtungen der eingangs genannten Art sehen gesonderte Leitungsführungen für Wasser und Luft vor. Insbesondere ist es bekannt, lediglich einen Gasstrahl unterhalb der Flüssigkeitsoberfläche einzublasen. Es ist weiters bereits bekannt, die zu belüftende Flüssigkeit umzuwälzen und gleichfalls unterhalb der Oberfläche der Flüssigkeit in einem Becken wiederum einzustossen, wobei die einzustossende umgewälzte Flüssigkeit das zur Belüftung dienende Gas vor ihrem Einstossen ansaugen soll, oder vor dem Einstoss in gesonderten Mischkammern intensiv mit dem einzutragenden Gas vermischt wird. Die kinetische Energie des Flüssigkeitsstrahles wird somit bei diesen bekannten Einrichtungen zumindest teilweise zum Ansaugen bzw. zum Transport des einzubringenden Gases verwendet.

Aus dem «Journal of the Water Pollution control Federation», Band 41, Nr. 10 (Oktober 1969), Seiten 1726–36 ist eine Vorrichtung für die Vermischung von Flüssigkeiten mit Gasen bekannt, bei der sowohl das Gas als auch die Flüssigkeit unter Druck in eine Mischdüse eingebracht werden.

Das Gas wird hiebei innerhalb einer Mischdüse intensiv mit der Flüssigkeit vermischt und das gasblasenhältige Gemisch unterhalb der Flüssigkeitsoberfläche ausgestossen.

Aus der FR-A 2 326 384 ist eine Einrichtung bekanntgeworden, bei welcher Luft drucklos zugeführt wird und von einem Flüssigkeitsmantel mitgerissen wird. Die Einrichtung mündet oberhalb des Flüssigkeitsspiegels um eine Durchmischung des Strahles vor dem Eintreten in die Flüssigkeitsoberfläche sicherzustellen. Aus der EP-A 44 498 ist eine Vorrichtung zum Begasen von Flüssigkeiten oder Suspensionen bekanntgeworden, bei welcher ein Wasserstrahl über einen konischen Mantel geteilt wird und über eine Abreisskante Gas ansaugt. Der auf diese Weise gebildete Mischstrahl wird in der Folge über weitere Leiteinrichtungen ausgestossen, wodurch eine intensive Mischung des Gases mit der Flüssigkeit vor dem Ausstoss sichergestellt wird. Aus der DE-OS 3 028 987 sind Injektoren bekanntgeworden, bei welchen Gas auch unter Druck zugeführt werden kann. Das Gasluftgemisch wird durch eine zweite Düse ausgestossen, wodurch wiederum eine intensive Mischung sichergestellt ist. Die US-PS 3 775 314 zeigt und beschreibt eine Einrichtung, bei welcher Flüssigkeit in eine Hochdruckzone in Rotation versetzt wird und nachfolgend in ein Medium mit wesentlich geringerem Druck ausgestossen wird. Beim Ausstoss soll hiebei ein partielles Vakuum erzielt werden, wobei bei Temperaturen von unter 30°C eine Eisbildung angestrebt wird, wobei das Eis Gasblasen mit sich tragen soll.

Die Erfindung zielt nun darauf ab, ein Verfahren der eingangs genannten Art zu schaffen, bei welchem die kinetische Energie des Flüssigkeitsstrahles besser ausgenutzt werden kann und eine besonders feine und in einfacher Weise regelbare Verteilung des Gases in der Flüssigkeit ergibt. Zur Lösung dieser Aufgabe besteht die Erfindung im wesentlichen darin, dass der Flüssigkeitsstrahl durch Leiteinrichtungen so eingebracht wird, dass er spätestens am Austrittsende der Düse den Gasstrahl zumindest teilweise ummantelt, worauf die Zerteilung des Gasstrahles nach dem Ausstoss in die Flüssigkeit vorgenommen wird. Bei einem derartigen Verfahren wird der Flüssigkeitsstrahl mit seiner gesamten kinetischen Energie so geformt, dass das gleichzeitig unter Druck zugeführte Gas nach dem Austritt aus der Düse den Flüssigkeitsstrahl durchdringen muss, wobei eine besonders feine Aufteilung des Gasstrahles in feine Gasblasen erfolgt. Die Zerteilung in Gasblasen wird um so effizienter, je mehr kinetische Energie des Flüssigkeitsstrahles beim Zerteilen des Gasstrahles vernichtet werden kann. Es entsteht auf diese Weise ein feinblasiger Mischstrahl, bei welchem die Gasförderung unabhängig von der Flüssigkeitsförderung regelbar wird, da die Wirkung einer derartigen Düse nicht auf dem Injektorprinzip beruht. Die kinetische Energie des Flüssigkeitsstrahles wird zur Erzeugung von Grenzflächen bzw. zur Oberflächenvergrösserung verwendet, wobei die Förderung des Gases nicht durch den Flüssigkeitsstrahl selbst bewirkt wird, sondern lediglich vom Gasdruck abhängig ist. Die kinetische Energie des Flüssigkeitsstrahles kann somit zur Gänze zur Verteilung der Gasblasen in der Flüssigkeit herangezogen werden.

Gemäss einer bevorzugten Verfahrensweise mündet der Flüssigkeitsstrahl ausserhalb des Luftstrahles und wird zu einem im Querschnitt kreisringförmigen Strahl geformt. In einfacher Weise kann hiefür der Flüssigkeitsstrahl, insbesondere der Wasserstrahl, gegen Leiteinrichtungen gerichtet sein. Derartige Leiteinrichtungen können eine gekrümmte, vorzugsweise halbkreisförmige Oberfläche aufweisen, deren konkave Seite dem Wasserstrahl zugewendet ist, wodurch sich die zumindest teilweise Ummantelung des Gasstromes ergibt. Die Ausbildung kann aber auch so getroffen sein, dass die Düsenmündung mit der Achse des Wasserzuführungskanales einen spitzen Winkel einschliesst, wobei die Luft bzw. der Sauerstoff über radiale Öffnungen der Wasserzuführungsleitung vor der Düsenmündung zugeführt wird und das in Achsrichtung der Wasserzuführungsleitung zugeführte Wasser vor dem Austritt durch die Düsenmündung gegen die Wand des abgewinkelten Teiles der Wasserzuführungsleitung bzw. der Düsenmündung gerichtet ist. Die Ummantelung des Gasstrahles erfolgt hiebei unmittelbar nach der Stelle, an welcher der Flüssigkeitsstrahl mit der Wandung der Wasserzuführungsleitung bzw. der Düsenmündung kollidiert. Die Ausbildung kann aber auch so getroffen sein, dass die Luft- bzw. Sauerstoffzuführungsleitung zumindest in ihrem der Düsenmündung zugewendeten Bereich koaxial mit der Wasserzuführungsleitung angeordnet ist und dass der Innendurchmesser der Wasserzuführungsleitung grösser ist als der Aussendurchmesser der Luft- bzw. Sauerstoffzuführungsleitung. Bei dieser Ausbildung ergibt sich unmittelbar ein konzentrischer Austritt von Flüssigkeits- und Gasstrahl, wobei der Flüssigkeitsstrahl den Gasstrahl umgibt.

Vorzugsweise münden die Luft- bzw. Sauerstoffzuführungsleitung und die Wasserzuführungsleitung in der gleichen Radialebene. Alternativ zu einer Abwinkelung der Wasserzuführungsleitung vor der Austrittsdüse kann die Ausbildung so getroffen sein, dass die Luft- bzw. Sauerstoffzuführungsleitung seitlich an die Wasserzuführungsleitung angeschlossen ist und dass in Strömungsrichtung vor dem Anschluss der Luft- bzw. Sauerstoffzuführungsleitung Ablenkeinrichtungen wie z.B. Düsen, Drallkörper od.dgl. in der Wasserzuführungsleitung vorgesehen sind, welche das Wasser vor Verlassen der Mischdüse gegen die Innenwand der Mischdüse richten. Bei einer derartigen Ausbildung wird auf Grund der Strömungsleitkörper eine Kollision des Wasserstrahles mit der Innenwand der Zuführungsleitung bzw. der Düse bewirkt, welche die gewünschte Ummantelung des Gasstrahles ergibt.

In allen Fällen soll das Gas bzw. die Luft und die Flüssigkeit unterhalb des Flüssigkeitsspiegels eingebracht werden, wobei vorzugsweise die Achsen der Düsenmündungen, und wenigstens die Strahlachsen des Luftstrahles, von der vertikalen Richtung abweichend und vorzugsweise im wesentlichen horizontal orientiert sind. Mit derartigen Mischdüsen wird neben einer besonders effizienten Einbringung von Gasen in Flüssigkeit auch der Vorteil erreicht, dass eine Regelung der eingetragenen Gas- bzw. Luftmenge ohne Änderung der einzutragenden Wassermenge in weiten Bereichen ausschliesslich durch Veränderung des Druckes des Gases möglich ist. Bei einer derartigen Regelung werden verschiedene Gasmengen mit einem gleichbleibenden Wirkungsgrad und damit besonders wirtschaftlich in die zu behandelnde Flüssigkeit eingetragen. Durch das Konstanthalten der Wassermenge, welche für jede vorgegebene Düsengeometrie als optimale Betriebswassermenge bestimmt werden kann, lassen sich bei geringster Antriebsleistung lediglich durch Veränderung der Gas- bzw. Luftmenge unterschiedliche Gas- bzw. Luftkonzentrationen erzielen. Es lässt sich somit eine Regelung der Gasmenge bei gleichbleibend hohem Wirkungsgrad der Vermischung der Flüssigkeit mit Gasen erzielen.

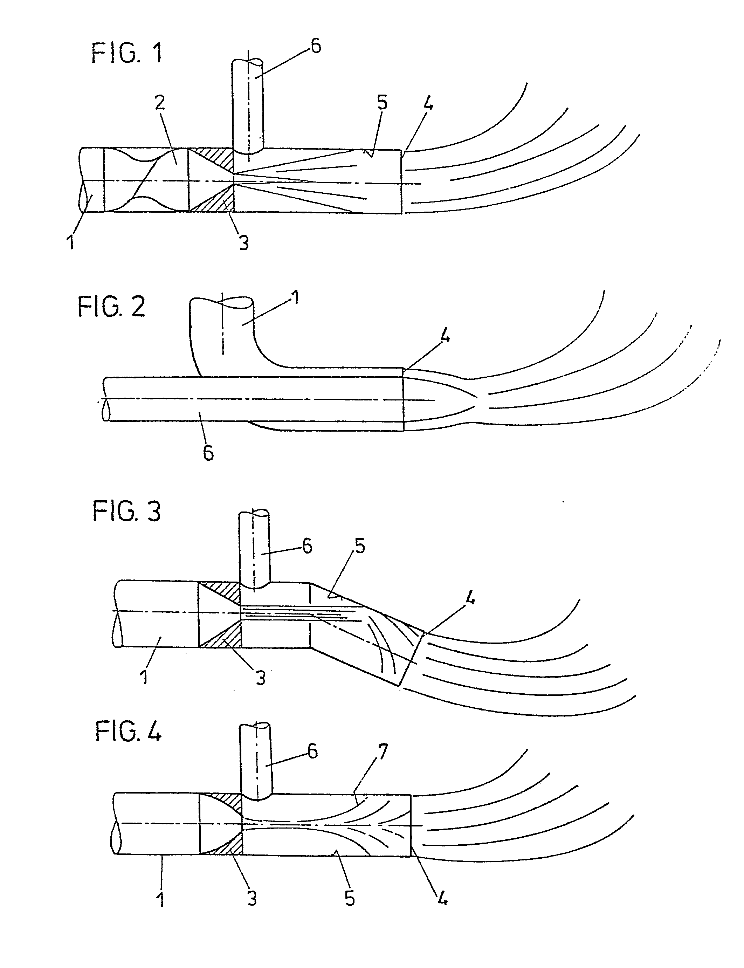

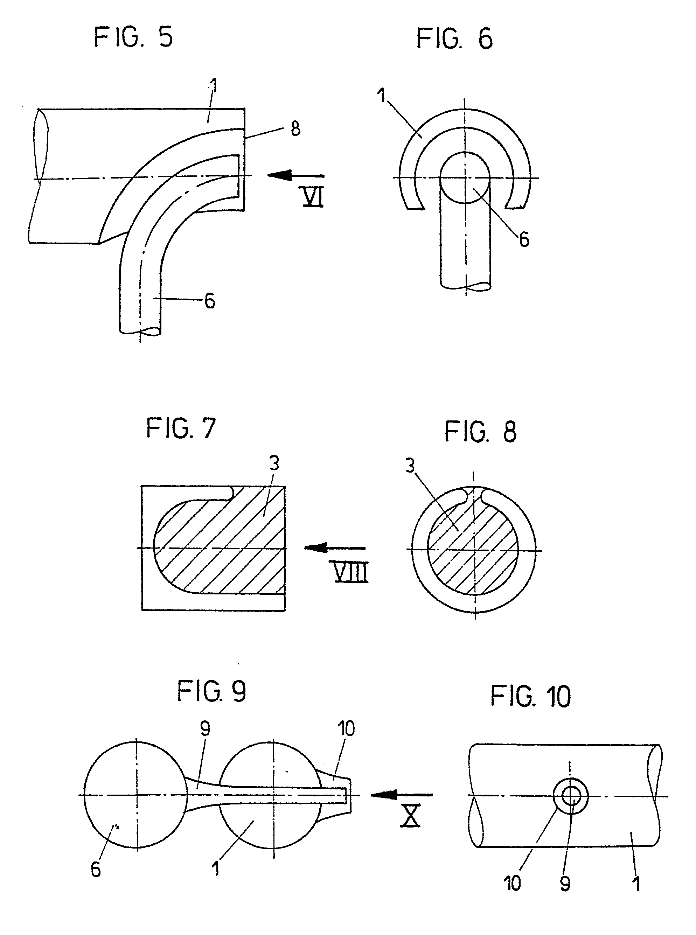

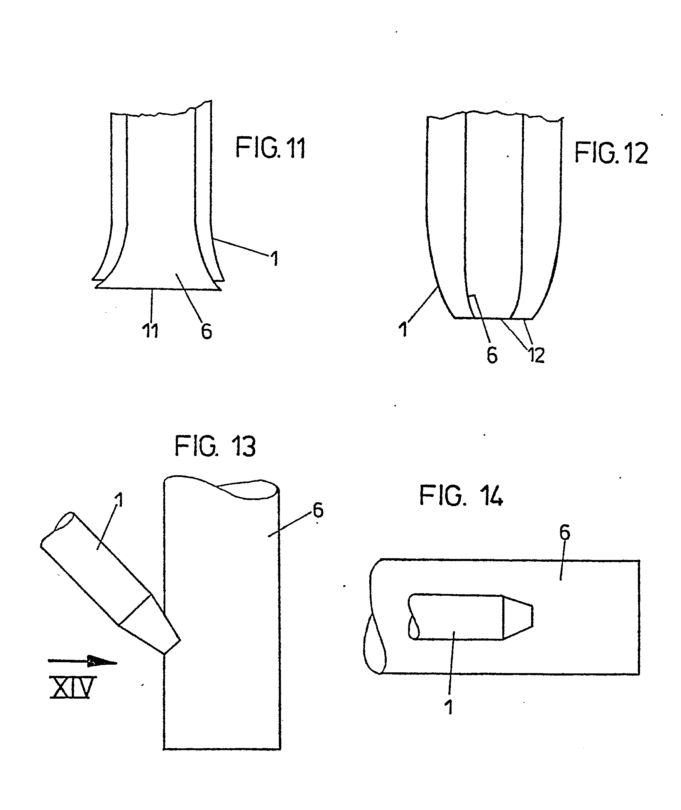

Die Erfindung wird nachfolgend an Hand von in der Zeichnung dargestellten Ausführungsbeispielen näher erläutert. In dieser zeigen Fig. 1 eine erste Ausführungsform einer erfindungsgemässen Mischdüse, die Fig. 2 bis 5 abgewandelte Ausführungsformen einer Ausbildung nach Fig. 1, Fig. 6 eine Ansicht in Richtung des Pfeiles VI der Fig. 5, Fig. 7 einen Querschnitt für einen strahlformenden Körper wie er bei einer Ausbildung nach Fig. 1 verwendet werden kann in der gleichen Ansicht wie in Fig. 1, Fig. 8 eine Ansicht des strahlformenden Körpers nach Fig. 7 in Richtung des Pfeiles VIII, Fig. 9 und 10 eine weitere Ausführungsform mit parallel angeordneten Flüssigkeits- und Gasleitungen, wobei Fig. 10 eine Ansicht in Richtung des Pfeiles X der Fig. 9 darstellt, die Fig. 11 und 12 weitere Ausbildungen von Mischdüsen in Ansichten analog den Fig. 1 bis 5, Fig. 13 und 14 eine weitere Ausführungsform, wobei Fig. 14 eine Ansicht in Richtung des Pfeiles XIV der Fig. 13 darstellt und Fig. 15 und 16 eine Ausführungsform, bei welcher die Achsen der Mündungen der Wasserdüsen die Achse der Mündung der Luftdüse schneiden, wobei Fig. 16 eine Ansicht in Richtung des Pfeiles XVI der Fig. 15 darstellt.

In Fig. 1 ist in die Wasserzuleitung 1 ein Drallkörper 2 eingesetzt, an welchem ein strahlformender Körper 3 anschliesst. Ein derartiger strahlformender Körper 3 kann beispielsweise den Wasserstrahl zu einem Flachstrahl formen. In jedem Fall aber soll dieser strahlformende Körper 3 eine Ablenkung des Strahles in der Weise ergeben, dass der Wasserstrahl noch vor dem Verlassen der Düse 4 mit der Innenwand 5 des Zuleitungsrohres oder der Düse kollidiert, um auf diese Weise den über die Luftleitung 6 zugeführten Luftstrahl zu ummanteln. Bei der Ausbildung nach Fig. 2 umgibt das Wasserzuleitungsrohr 1 die Luftzuleitung 6 im Bereich der Düsenmündung 4 konzentrisch, so dass sich unmittelbar eine Ummantelung des Luftstrahles ergibt. Bei der Ausbildung nach Fig. 3 ist das Wasserzuleitungsrohr vor der Düse 4 geknickt, so dass der Wasserstrahl an der Innenwand 5 des Zuleitungsrohres auftreffen muss. Auch durch diese Ausbildung ergibt sich eine zumindest teilweise Ummantelung des über die Luftzuleitung 6 zugeführten Luftstrahles. Bei der Ausbildung nach Fig. 4 ist ein vom strahlformenden Körper 3 in Fig. 1 abweichender strahlformender Körper vorgesehen. Auch hier wird der Wasserstrahl 7 so geformt, dass er vor dem Verlassen der Düse 4 mit der Innenwand 5 des Zuleitungsrohres kollidiert, um die Ummantelung des über die Zuleitung 6 zugeführten Luftstrahles sicherzustellen.

Bei der Ausbildung nach Fig. 5 und 6 erfolgt die Luftzuleitung 6 im stirnseitigen Endbereich der Wasserzuleitung 1 und dieser stirnseitige Endbereich der Wasserzuleitung 1 ist als Leiteinrichtung ausgebildet. Der Wasserstrahl ummantelt bei dieser Ausbildung den Luftstrahl zumindest teilweise und verlässt somit die Stirnseite 8 nahezu laminarströmend mit dem aus der Leitung 6 ausströmenden Luftstrom. Auch bei dieser Ausbildung ebenso wie bei den Ausbildungen nach den Fig. 1 bis 4 wird die kinetische Energie des Wasserstrahles in keiner Weise für den Transport der Luft bzw. des Gases herangezogen und die Durchwirbelung der Luft mit dem Wasser erfolgt nach dem Austreten aus der Düse bzw. der Stirnseite der Zuführungsleitungen.

Bei dem in Fig. 7 und 8 dargestellten strahlformenden Körper 3 wird der Wasserstrahl zu einem kreisringförmigen Strahl geformt, wobei der Kreisring lediglich im Bereich der Befestigung des strahlformenden Körpers 3 im Inneren der Wasserzuführungsleitung 1 unterbrochen ist.

Bei den Ausbildungen nach Fig. 9 und 10 ist die Wasserzuführungsleitung 1 parallel zur Gas- bzw. Luftzuführungsleitung 6 angeordnet. Eine derartige Ausbildung lässt sich in einfacher Weise dem Querschnitt und der Grösse des Belüftungsbeckens anpassen, wobei die Luftzuführungsleitung 6 über radiale Kanäle 9 die Wasserzuführungsleitung 1 durchsetzt. Die Wasserzuführungsleitung 1 weist gleichfalls radiale Fortsätze 10 auf, mit welchen das Ende der radialen Kanäle 9 ummantelt wird, so dass sich auch hier eine Ummantelung des Gasstrahles durch den Wasserstrahl ergibt.

Die Form der Austrittsöffnungen des Wasser- bzw. Gasstrahles kann in weiten Grenzen variieren. Im Falle der Fig. 11 ist das Mündungsende 11 der Luftzuführungsleitung 6 trompetenförmig aufgeweitet und von einem analog gestalteten Wasserzuführungsrohr 1 ummantelt. Demgegenüber weist bei der Ausbildung nach Fig. 12 sowohl die Luftzuführungsleitung 6 als auch die Wasserzuführungsleitung 1 nahe ihrem stirnseitigen Ende 12 eine düsenförmige Verengung auf. Bei der Ausbildung nach Fig. 13 und 14 wird über über eine seitlich angeschlossene Wasserzuführungsleitung 1 das Wasser in die Luftzuführungsleitung 6 eingespeist, so dass der Wasserstrahl am Mantel des Luftzuführungsrohres 6 auftrifft und auf diese Weise die gewünschte Ummantelung des Luftstrahles ergibt.

## Patentansprüche

1. Verfahren für die Vermischung von Flüssigkeiten mit Gasen, zum Eintragen von Gasen in eine Flüssigkeit unterhalb ihres Flüssigkeitsspiegels, bei welchem sowohl das Gas als auch die Flüssigkeit unter Druck einer Düse (4) zugeführt werden, dadurch gekennzeichnet, dass der Flüssigkeitsstrahl durch Leiteinrichtungen so eingebracht wird, dass er spätestens am Austrittsende der Düse (4) den Gasstrahl zumindest teilweise ummantelt, worauf die Zerteilung des Gasstrahles nach dem Ausstoss in die Flüssigkeit vorgenommen wird.

2. Verfahren nach Anspruch 1, dadurch gekennzeichnet, dass der Flüssigkeitsstrahl so geleitet wird, dass er ausserhalb des Luftstrahles mündet und zu einem im Querschnitt kreisringförmigen Strahl geformt wird.

3. Verfahren nach Anspruch 1 oder 2, dadurch gekennzeichnet, dass gekrümmte Leiteinrichtungen, deren konkave Seite dem Wasserstrahl zugewendet ist, verwendet werden.

4. Verfahren nach einem der Ansprüche 1 bis 4, dadurch gekennzeichnet, dass Düsen (4) verwendet werden, deren Düsenmündung mit der Achse der Wasserzuführungsleitung (1) einen spitzen Winkel einschliesst, wobei die Luft bzw. der Sauerstoff über radiale Öffnungen (6) der Wasserzuführungsleitung (1) vor der Düsenmündung zugeführt wird und das in Achsrichtung der Wasserzuführungsleitung (1) zugeführte Wasser vor dem Austritt durch die Düsenmündung (4) gegen die Wand (5) des abgewinkelten Teiles der Wasserzuführungsleitung (1) bzw. der Düsenmündung (4) gerichtet wird (Fig. 3).

5. Verfahren nach einem der Ansprüche 1 bis 3, dadurch gekennzeichnet, dass die Luft bzw. der Sauerstoff zumindest in ihrem (seinem) der Düsenmündung zugewendeten Bereich koaxial mit dem Wasser zugeführt wird, wobei der Innendurchmesser der Wasserzuführungsleitung (1) grösser ist als der Aussendurchmesser der Luft- bzw. Sauerstoffzuführungsleitung (6) (Fig. 2, 8).

6. Verfahren nach Anspruch 5, dadurch gekennzeichnet, dass Luft bzw. Sauerstoff und Wasser in der gleichen Radialebene ausgestossen werden.

7. Verfahren nach einem der Ansprüche 1 bis 5, dadurch gekennzeichnet, dass Düsen (4) verwendet werden, bei welchen die Luft- bzw. Sauerstoffzuführungsleitung (6) seitlich an die Wasserzuführungsleitung (1) angeschlossen ist und dass in Strömungsrichtung vor dem Anschluss der Luft- bzw. Sauerstoffzuführungsleitung (6) Ablenkeinrichtungen wie z. B. Düsen (3), Drallkörper od. dgl. in der Wasserzuführungsleitung (1) vorgesehen sind, welche das Wasser vor Verlassen der Düse (4) gegen die Innenwand (5) der Düse (4) richten (Fig. 1, 3, 4).

8. Verfahren nach einem der Ansprüche 1 bis 7, dadurch gekennzeichnet, dass der Gasstrahl im wesentlichen horizontal ausgestossen wird.

## Claims

1. Process for mixing liquids with gases, for introducing gases into a liquid below its liquid level, in which the gas as well as the liquid are supplied to a nozzle (4) under pressure, characterised in that the liquid jet is introduced by guide means in a manner such that it shrouds at least partially the gas jet at the latest at the exit end of the nozzle (4) whereupon the dispersion of the gas jet is carried out after ejection into the liquid.

2. Process as claimed in claim 1, characterised in that the liquid jet is guided in a manner such that it is discharged outside of the air jet and is shaped to a jet of annular cross section.

3. Process claimed in claim 1 or 2, characterised in that arcuate guide means are used the concave side of which is facing the water jet.

4. Process a claimed in any one of claims 1 to 3, characterised in that nozzles (4) are used whose nozzle mouth forms a sharp angle with the axis of the water supply line (1), wherein air or oxygen, resp., is supplied via radial openings (6) of the water supply line (1) in front of the nozzle mouth and the water supplied in the axial direction of the water supply line (1) is directed onto the wall (5) of the inclined portion of the water supply line (1) or of the nozzle mouth (4), resp., prior to penetrating through the nozzle mouth (Fig. 3).

5. Process as claimed in any one of claims 1 to 3, characterised in that the air or oxygen, resp., is supplied coaxially with the water at least in its range adjacent the nozzle mouth, the inner diameter of the water supply line (1) being greater than the outer diameter of the air or oxygen supply line (6), resp. (Fig. 2, 8).

6. Process as claimed in claim 5, characterised in that air or oxygen, resp., and water are ejected in the same radial plane.

7. Process as claimed in any one of claims 1 to 5, characterised in that nozzles (4) are used in which the air or oxygen supply line (6), resp., is connected to the water supply line (1) at one side thereof and that upstream of the connection of the air or oxygen supply line (6), resp., baffle means such as nozzles (3), swirl bodies or the like are arranged within the water supply line (1), which direct the water prior to leaving the nozzle (4) onto the inner wall (5) of the nozzle (4) (Fig. 1, 3, 4).

8. Process as claimed in any one of claims 1 to 7, characterised in that the gas jet is ejected substantially in a horizontal direction.

**Revendications**

1. Procédé de mélange de liquides avec des gaz, pour l'introduction de gaz dans un liquide en dessous de la surface de celui-ci, selon lequel aussi bien le gaz que le liquide sont amenés, sous pression à une buse (4), caractérisé en ce que le jet de liquide est introduit par l'intermédiaire de moyens de guidage de telle sorte qu'il enveloppe au moins partiellement le jet de gaz au plus tard à l'extrémité de sortie de la buse (4), sur quoi la dispersion du jet de gaz dans le liquide s'opère après l'éjection.

2. Procédé selon la revendication 1, caractérisé en ce que le jet de liquide est guidé de telle sorte qu'il débouche à l'extérieur du jet d'air et prenne la conformation d'un jet présentant, en coupe, la forme d'une couronne circulaire.

3. Procédé selon la revendication 1 ou 2, caractérisé en ce que l'on utilise des moyens de guidage incurvés, dont le côté concave est tourné vers le jet d'eau.

4. Procédé selon l'une des revendications 1 à 3, caractérisé en ce que l'on utilise des buses (4) dont l'orifice de buse définit un angle aigu avec l'axe de la conduite (1) d'amenée d'eau, l'air ou l'oxygène étant amené en amont de l'orifice de buse par des ouvertures radiales (6) de la conduite (1) d'amenée d'eau et l'eau amenée suivant la direction axiale de la conduite (1) d'amenée d'eau étant dirigée par l'orifice de buse (4), en amont de la sortie, contre la paroi (5) de la partie inclinée de la conduite (1) d'amenée d'eau ou de l'orifice de buse (4) (fig. 3).

5. Procédé selon l'une des revendications 1 à 3, caractérisé en ce que l'air ou l'oxygène est amené coaxialement à l'eau dans sa zone tournée vers l'orifice de buse, le diamètre intérieur de la conduite (1) d'amenée d'eau étant supérieur au diamètre extérieur de la conduite (6) d'amenée d'air ou d'oxygène (figs 2, 8).

6. Procédé selon la revendication 5, caractérisé en ce que l'air ou l'oxygène et l'eau sont éjectés dans le même plan radial.

7. Procédé selon l'une des revendications 1 à 5, caractérisé en ce que l'on utilise des buses (4) dans le cas desquelles la conduite (6) d'amenée d'air ou d'oxygène est raccordée latéralement à la conduite (1) d'amenée d'eau et en ce que des moyens déviateurs tels que des buses (3), des corps de giration ou moyens analogues sont prévus dans la conduite (1) d'amenée d'eau en amont du raccordement de la conduite (6) d'amenée d'air ou d'oxygène, lesquels moyens déviateurs dirigent l'eau contre la paroi interne (5) de la buse (4) avant la sortie de la buse (4) (figs 1, 3, 4).

8. Procédé selon l'une des revendications 1 à 7, caractérisé en ce que le jet de gaz est éjecté pour l'essentiel horizontalement.

FIG. 1

FIG. 2

FIG. 3

FIG. 4

FIG. 5

FIG. 6

FIG. 7

FIG. 8

FIG. 9

FIG. 10

FIG. 11

1

11    6

FIG. 12

1

6    12

FIG. 13

1

6

XIV

FIG. 14

6

1